(19) Europäisches Patentamt / European Patent Office / Office européen des brevets

(11) **EP 4 574 943 A1**

(12) **EUROPEAN PATENT APPLICATION**

(43) Date of publication:
**25.06.2025 Bulletin 2025/26**

(21) Application number: **24206149.7**

(22) Date of filing: **11.10.2024**

(51) International Patent Classification (IPC):
***C11D 1/37*** *(2006.01)* ***C11D 3/00*** *(2006.01)*
***C11D 3/386*** *(2006.01)* ***C11D 1/62*** *(2006.01)*
*C11D 1/14 (2006.01)* *C11D 1/22 (2006.01)*

(52) Cooperative Patent Classification (CPC):
**C11D 3/38627; C11D 1/37; C11D 1/62; C11D 3/0015;** C11D 1/146; C11D 1/22; C11D 2111/12; C11D 2111/44

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023 US 202363612409 P**
**05.02.2024 EP 24155769**

(71) Applicant: **The Procter & Gamble Company**
**Cincinnati, OH 45202 (US)**

(72) Inventors:
- **BIANCHETTI, Giulia Ottavia**
  **1853 Strombeek-Bever (BE)**
- **HOUCKHAM, Laura**
  **NEWCASTLE UPON TYNE, NE12 9TS (GB)**
- **KEULEERS, Robby Renilde Francois**
  **1853 Strombeek-Bever (BE)**
- **LOUGHNANE, Brian Joseph**
  **Cincinnati, 45202 (US)**
- **PATTERSON, Steven George**
  **Newcastle-upon-Tyne, NE12 9TS (GB)**
- **WERNICKE, Todd Michael**
  **Cincinnati, 45202 (US)**

(74) Representative: **P&G Patent Belgium UK**
**N.V. Procter & Gamble Services Company S.A.**
**Temselaan 100**
**1853 Strombeek-Bever (BE)**

Remarks:
The complete document including Reference Table(s) and the Sequence Listing(s) can be downloaded from the EPO website

(54) **METHOD OF LAUNDERING FABRIC AT LOW TEMPERATURES**

(57) The need for a method of effectively laundering fabrics that have been treated with fabric softener active, at low temperatures, while also providing improved whiteness is met through the use of a laundering composition which comprises an esterase enzyme.

EP 4 574 943 A1

## Description

### FIELD OF THE INVENTION

Method of laundering fabric treated with fabric softener at lower temperatures.

### BACKGROUND OF THE INVENTION

There is an increasing demand for more sustainable laundry practices, with a focus on reducing energy consumption and minimizing the carbon footprint. Lowering the wash water temperature has emerged as an effective method to achieve these sustainability goals while also maintaining the quality and longevity of textiles used in clothing. Consequently, laundry detergent compositions have been reformulated to provide efficient cleaning even at lower temperatures below 30 °C, addressing concerns about poor dirt and oily soil removal. However, many users remain concerned about cleaning efficacy when laundering at low temperatures.

A significant additional challenge arises when fabric softeners are added during the rinse cycle, for instance, to reduce wrinkles and improve fabric feel. It is known that fabric softener actives used in this process can negatively impact the performance of subsequent laundry detergent washes, leading to a reduction in fabric whiteness. Since there is a heightened concern for cleaning efficacy during low temperatures, this whiteness loss is typically more prominent when laundering clothes at lower temperatures, and especially clothes comprising cotton.

Although the addition of certain actives, such as mid to long chain ethoxylated nonionic surfactants, has shown some improvement in mitigating whiteness loss caused by fabric softeners, there remains a need to further reduce this issue, when using fabric softeners in low-temperature wash processes. Addressing this challenge would provide consumers with a comprehensive solution that combines the benefits of sustainable laundering, effective cleaning, and improved fabric whiteness, ensuring a positive laundry experience while minimizing environmental impact.

EP2987849A relates to a method of laundering a fabric comprising the steps of: contacting the fabric with a lipid esterase selected from class E.C. 3.1.1.3, class E.C. 3.1.1.1 , class E.C. 3.1.1.74 or a combination thereof. US2014/230156A relates to a method of laundering a fabric, comprising the steps of: contacting a fabric with a lipid esterase; contacting the fabric from step with a cationically charged fabric softening active, wherein the cationically charged fabric softening active is a substrate for the lipid esterase; contacting the fabric from step with a laundry detergent composition, wherein the laundry detergent composition comprises an anionic surfactant, wherein the anionic surfactant is present at the ratio of anionic surfactant to fabric on a weight to weight basis of from 1:200 to 1:500. EP3312266A relates to a process of washing fabrics wherein the fabrics have a softening active deposited thereon, and to the use of a liquid laundry detergent composition comprising a) anionic surfactant and 0% nonionic surfactant or b) anionic surfactant and nonionic surfactant in a ratio of 5:1 to 23:1, in such processes. EP2476743A relates to a method of laundering fabric onto which a cationic fabric softening active has been deposited and dried comprising the step of contacting the fabric with an aqueous wash liquor having the following composition: 15 to 600 ppm non-soap surfactant, at least 50 ppm ethoxylated polyethyleneimine, at least 25 ppm polyester soil release polymer, the total level of the polymers being at least 20 wt% of the level of non-soap surfactant, 0.1 to 100 ppm enzyme selected from protease, amylase, cellulase, and optionally, lipase enzyme.

### SUMMARY OF THE INVENTION

The present invention relates to a method of laundering fabrics, the method comprising the steps of: providing fabric that has been treated with fabric conditioning active; washing the fabric in at least one wash step, wherein in the wash step, the fabric is washed in a wash liquor comprising water and a detergent composition; wherein: the wash liquor is at a temperature of 30 °C or less; and the detergent composition comprises a surfactant system, wherein the surfactant system comprises anionic surfactant, wherein the detergent composition further comprises an esterase enzyme.

### DETAILED DESCRIPTION OF THE INVENTION

The laundry methods described herein improve the whiteness perception of fabrics that have previously been laundered using fabric softener active, when the fabrics are laundered at low temperature. In particular, it has been found that laundering clothes at lower temperature typically results in a more sustainable laundering process, especially since a substantial part of the energy used in a typical laundering process is consumed heating the wash water. However, it has also been found during cold water laundering, it is more challenging to alleviate the decrease in whiteness impression that arises when fabric has previously been laundered using fabric softener.

It has been found that the compositions described herein, comprising esterase enzyme, improve the whiteness of fabrics, preferably fabrics comprising cotton, after the fabrics have been treated with fabric softener, even when the fabrics

are subsequently washed at a low temperature of 30 °C or less.

Method of laundering fabric:

The present invention relates to a method of laundering fabric. While the present invention is particularly directed towards domestic, that is, household, laundry methods, the invention is also relevant for larger scale, industrial laundry processes, including both continuous and discontinuous industrial laundry processes.

The present method is suitable for laundering fabric selected from the group consisting of: cotton, polyester, and mixtures thereof, and especially fabrics comprising cotton.

In a domestic laundering process, the first step typically involves sorting the laundry based on colour, fabric type, and level of dirtiness. This ensures that delicate fabrics are separated from heavier ones and that heavily soiled items are treated appropriately. Alternatively, the user may choose not to sort the fabrics to be washed, for instance. At least part of the fabrics to be laundered includes fabric that has been treated with fabric softener. At least some of the fabrics can be treated before in laundering in a washing machine, for instance, through "spot treating" stains using a stain remover, bleach, or even detergent composition.

Once sorted, the laundry is loaded into the washing machine drum. The present invention particularly relates to laundry methods whereby the fabrics being washed are white or of light colours. Relevant white and light colour fabrics may be defined in terms of L*a*b* values (the CIE LAB whiteness space (CIE 1976 L* a* b*) with an L**max* in the range 70-100, preferably 85-99, more preferably 92-99, where L* is the lightness value of the whiteness (L*=O yields black and L*=100 yields white), a* is the red-green value (negative values indicate green while positive values indicate red) and b* is the yellow-blue value (negative values indicate blue and positive values indicate yellow. However, the present methods can also alleviate the dingy impression from laundering at low temperature, coloured fabrics that have previously been treated with fabric softener active.

The laundry detergent is then added at the appropriate level, which can be defined by the user, or in the case of "autodose" washing machines, the amount of detergent that is added can be determined by the washing machine itself after the washing machine is started, using sensors and algorithms provided within the washing machine.

The washing machine is started, and the laundry undergoes a series of steps, including optionally a prewash step, and at least one wash step which comprises adding the detergent composition and water to washing machine drum comprising the fabrics to be washed, soaking and agitating the fabrics.

The at least one wash step can have a duration of from 5 minutes to 60 minutes, preferably from 10 minutes to 40 minutes, more preferably from 15 minutes to 25 minutes.

Typically, the amount of water added during each wash step is from 5.0l to 641, preferably from 7.0 1 to 40 1 litres, more preferably from 10 1 to 20 1.

The wash liquor can have a surfactant concentration of greater than 300 ppm, preferably from 400 ppm to 2,500 ppm, more preferably from 600 ppm to 1000 ppm.

The fabric and wash liquor can be present in a weight ratio of from 0.02 to 0.6, preferably from 0.03 to 0.5, more preferably from 0.1 to 0.4.

Typically, the amount of detergent composition added during each wash step can be from 15 ml to 200 ml, preferably from 20 ml to 100 ml, more preferably from 25 ml to 75 ml, for liquid detergent compositions, or from 10 g to 300 g, preferably from 20 g to 200 g litres, more preferably from 30 g to 150 g, for powder or granular detergent compositions.

As such, the detergent composition can be present in the wash liquor of the wash step at a level of from 300 ppm to 2500 ppm, preferably from 400 ppm to 2000 ppm, more preferably from 500 ppm to 1500 ppm.

The detergent composition can be added directly into the washing machine drum. Alternatively, the detergent composition can be added into a detergent compartment, provided in the washing machine. Where the detergent composition is added to a detergent compartment, at the start of the wash step, the detergent composition is dispensed into the washing machine drum my mixing with at least part of the water used to make the wash liquor. Such dispensing has the advantage of at least partially solubilising the detergent composition prior to addition to the washing machine drum. The solubilized detergent composition works to remove dirt, stains, and odors from the fabrics. Typically, the wash step ends with spin drying in order to remove a substantial part of the wash liquor (and dirt) from the fabric.

The present method of laundering fabrics can comprise one or more than one wash step. Preferably, the method comprises from one to three wash steps, preferably from one to two wash steps. The wash steps are typically consecutive.

The present invention relates to low temperature methods of laundering, wherein the wash liquor is at a temperature of 30 °C or less, preferably from 10 °C to 30 °C, more preferably from 15 °C to 25 °C.

As mentioned earlier, the method can optionally comprise a pre-wash step. During the prewash step, the fabrics are soaked before the wash cycle step, in order to loosen up dirt and stains. Detergent composition is typically also added to during the prewash step. Alternatively, or in addition, a prewash additive or stain removal composition can be added to during the prewash step. Such prewash additives or stain removal compositions can comprise bleach, or bleach releasing compounds such as a percarbonate.

The last wash step is typically proceeded by one or more rinse steps. The rinse step typically comprises the addition of water, followed by agitation, followed by spin-drying to remove a substantial part of the rinse water and entrained wash liquor. Typically, the amount of water added during each rinse step is from 5.0 1 to 64 1, preferably from 7.0 l to 40 l litres, more preferably from 10 1 to 20 1.

The water used during the at least one rinse step is typically unheated and hence is typically at the temperature of the domestic water supply. That is, typically from 10 °C to 15 °C.

Preferably, the method comprises from one to three rinse steps, preferably from one to two wash steps. The rinse steps are typically consecutive.

After the last rinse cycle, the fabrics are dried. Depending on the available facilities and personal preference, the laundry can be air-dried on a clothesline or drying rack, or placed in a dryer. If using a dryer, the appropriate settings, such as temperature and drying time, are selected to prevent damage to the fabrics.

Fabric conditioning active

In the methods of the present invention, the fabrics have been previously treated with a fabric conditioning composition, such as during an earlier laundry wash, preferably in the previous laundry wash, with the fabric softener being typically applied during the rinse step.

The fabric has been treated with a liquid fabric conditioning composition, typically an aqueous liquid fabric conditioning composition, comprising alkyl quaternary ammonium ester materials, also often called "ester quats". Such ester quats are useful for providing conditioning benefits such as softness, anti-wrinkle, anti-static, conditioning, anti-stretch, color, and/or appearance benefits to target fabrics.

The liquid fabric conditioning composition may comprise from 2% to 20%, or from 2% to 15%, or from 2% to 8%, by weight of the liquid conditioning composition, of the ester quat softening active.

The liquid conditioning composition can have been added during the rinse step of a prior wash cycle, such that the ester quat softening active was present in the rinse liquor at a level of greater than 50 ppm or from 50 ppm to 500 ppm, preferably from 100 ppm to 400 ppm, more preferably from 150 ppm to 300 ppm.

Suitable quaternary ammonium ester softening actives include, but are not limited to, materials selected from the group consisting of: monoester quats, diester quats, triester quats and mixtures thereof.

Preferably, the level of monoester quat is from 2.0% to 40.0%, the level of diester quat is from 40.0% to 98.0%, the level of triester quat is from 0.0% to 25.0% by weight of total quaternary ammonium ester softening active.

Suitable quaternary ammonium ester softening active may comprise compounds of the following formula:

$$\{R2(4\text{-}m) - N+ - [X - Y - R1]m\}\ A-$$

wherein:

m is 1, 2 or 3 with proviso that the value of each m is identical;
each R1 is independently hydrocarbyl, or branched hydrocarbyl group, preferably R1 is linear, more preferably R1 is partially unsaturated linear alkyl chain;
each R2 is independently a C1-C3 alkyl or hydroxyalkyl group, preferably R2 is selected from methyl, ethyl, propyl, hydroxyethyl, 2-hydroxypropyl, 1-methyl-2 hydroxyethyl, poly(C2-3¬ alkoxy), polyethoxy, benzyl;
each X is independently -(CH2)n-, -CH2-CH(CH3)- or -CH(CH3)-CH2- and
each n is independently 1, 2, 3 or 4, preferably each n is 2;
each Y is independently -O-(O)C- or -C(O)-O-;
A- is independently selected from the group consisting of chloride, methyl sulfate, and ethyl sulfate, preferably A- is selected from the group consisting of chloride and methyl sulfate;
with the proviso that when Y is -O-(O)C-, the sum of carbons in each R1 is from 13 to 21, preferably from 13 to 19. Preferably, X is -CH2-CH(CH3)- or -CH(CH3)-CH2- to further improve the hydrolytic stability of the quaternary ammonium ester softening active, and hence further improve the stability of the liquid fabric softener composition.

Because of the balance of processability and odor of the quaternary ammonium ester softening active, in preferred liquid fabric softener compositions, the iodine value of the parent fatty acid from which the quaternary ammonium fabric softening active is formed is typically from 0 to 100, more preferably from 10 to 60, even more preferably from 15 to 45.

The ester quat softening actives are typically derived from fatty acid. The fatty acid may be partially hydrogenated, as such processes can provide the desired amount of trans fatty acids. By "partially hydrogenated" as used herein, it is meant that either the fatty acids themselves undergo a partial hydrogenation process, or that the oil from which

the fatty acids are derived undergoes a hydrogenation process, or both. Additionally, partial hydrogenation processes reduce the amount of double-unsaturated fatty acids, the presence of which may lead to color and/or odor instabilities in final product.

The fatty acids can be derived from plants. Suitable sources of plant-derived fatty acids include vegetable oils, such as canola oil, safflower oil, peanut oil, sunflower oil, sesame seed oil, rapeseed oil, cottonseed oil, corn oil, soybean oil, tall oil, rice bran oil, palm oil, palm kernel oil, coconut oil, other tropical palm oils, linseed oil, tung oil, and the like. Preferably, the fatty acid comprises fatty acids that are derived from cottonseed, rapeseed, sunflower seed, or soybean, preferably from cottonseed. These materials are particularly preferred because they tend to produce fatty acids having a desirable trans-unsaturation content upon partial hydrogenation.

The fatty acids may include an alkyl portion containing, on average by weight, from 13 to 22 carbon atoms, or from 14 to 20 carbon atoms, preferably from 16 to 18 carbon atoms, where the carbon count includes the carbon of the carboxyl group. The population of fatty acids may be present in a distribution of alkyl chains sizes.

The alkyl quaternary ammonium ester softening actives may comprise compounds formed from fatty acids that are unsaturated, meaning that the fatty acids comprise at least one double bond in the alkyl portion. The fatty acids may be mono-unsaturated (one double bond), or they may be di-unsaturated (or double-unsaturated; two double bonds). Preferably, most of the unsaturated fatty acids in the fatty acid feedstock are mono-unsaturated.

The fatty acids may comprise unsaturated C18 chains, which may include a single double bond ("C18:1") or may be double unsaturated ("C18:2"). (For reference, a fatty acid with a saturated C18 chain may be referred to as "C18:0".) The fatty acid feedstock may comprise from 50% to 85%, preferably from 60% to about 80%, more preferably from 70% to 80%, by weight of the fatty acid feedstock, of C18 fatty acids, regardless of saturated or unsaturated status. The fatty acid feedstock may comprise from 20% to 60%, preferably from 40% to 60%, more preferably from 45% to 55%, by weight of the fatty acid feedstock, of C18:0 fatty acids. The fatty acid feedstock may comprise from 15% to 50%, preferably from 15% to 30%, preferably from 18% to 25%, by weight of the fatty acid feedstock, of C18:1 fatty acids. The fatty acid feedstock may comprise from 0% (e.g., none) to 20%, or from 0% to 15%, or from 0% to 10%, or from 0% to 5%, by weight of the fatty acid feedstock, of C18:2 fatty acids. The fatty acid feedstock may comprise from 1% to 15%, preferably from 5% to 10%, by weight of the fatty acid feedstock, of C18:2 fatty acids.

The ester quat material can be produced in a two-step synthesis process. First, an esteramine can be produced by through an esterification reaction using fatty acids and an alkanolamine. In a second step, the product can be quaternized using an alkylating agent.

The liquid conditioning compositions of use in the present invention may comprise other conditioning agents in addition to the ester quats described above. The other conditioning agents may be selected from the group consisting of quaternary ammonium ester compounds other than those described above, silicones, non-ester quaternary ammonium compounds, amines, fatty esters, sucrose esters, silicones, dispersible polyolefins, polysaccharides, fatty acids, softening or conditioning oils, polymer latexes, glyceride copolymers, or combinations thereof.

Examples of suitable quaternary ammonium ester softening actives are commercially available from KAO Chemicals under the trade name Tetranyl® AT-1 and Tetranyl® AT-7590, from Evonik under the tradename Rewoquat® WE16 DPG, Rewoquat® WE18, Rewoquat® WE20, Rewoquat® WE28, and Rewoquat® 38 DPG, from Stepan under the tradename Stepantex® GA90, Stepantex® VR90, Stepantex® VK90, Stepantex® VA90, Stepantex® DC90, and Stepantex® VL90A.

These types of agents and general methods of making them are disclosed in US4137180.

Laundry detergent composition

The laundry detergent composition can be in any suitable form, such as liquid, paste, granular, solid, powder, or in conjunction with a carrier such as a substrate. Preferred laundry detergent compositions are either liquid or granular, with liquid being most preferred.

As used herein, "liquid detergent composition" refers to liquid detergent composition which is fluid, and preferably capable of wetting and cleaning a fabric, e.g., clothing in a domestic washing machine. As used herein, "laundry detergent composition" refers to compositions suitable for washing clothes. The composition can include solids or gases in suitably subdivided form, but the overall composition excludes product forms which are non-fluid overall, such as tablets or granules. The liquid laundry detergent composition preferably has a density in the range from 0.9 to 1.3 grams per cubic centimetre, more specifically from 1.00 to 1.10 grams per cubic centimetre, excluding any solid additives but including any bubbles, if present.

The composition can be an aqueous liquid laundry detergent composition. For such aqueous liquid laundry detergent compositions, the water content can be present at a level of from 5.0 % to 95 %, preferably from 25 % to 90 %, more preferably from 50 % to 85 % by weight of the liquid detergent composition.

The pH range of the detergent composition is from 6.0 to 8.9, preferably from pH 7 to 8.8.

The detergent composition can also be encapsulated in a water-soluble film, to form a unit dose article. A water-soluble unit dose article comprises at least one water-soluble film formed to create at least one internal compartment, wherein the at least one internal compartment comprises the liquid detergent composition. As such, the water-soluble film dissolves or disperses into a wash liquor comprising water. The water-soluble film is sealed such that the detergent composition does not leak out of the compartment during storage. Upon addition of the water-soluble unit dose article to water, the water-soluble film dissolves and releases the contents of the internal compartment into the wash liquor.

Liquid detergent compositions, contained within the unit dose article are low in water, comprising less than 20%, preferably from 5.0% to 20%, more preferably from 10% to 15% by weight of water. Such liquid detergent compositions are also typically highly concentrated, comprising ingredients, such as surfactants, at a level of 25% to 100%, preferably 30% to 70% higher than the active levels present in liquid detergent compositions which are not encapsulated into unit dose articles.

The unit dose article may comprise more than one compartment. The compartments may be arranged in superposed orientation, i.e. one positioned on top of the other. Alternatively, the compartments may be positioned in a side-by-side orientation, with the compartments separated by at least one seal. One compartment can at least partially surround a second compartment, or may completely enclose the second compartment. The unit dose article can comprise at least two compartments, one of the compartments being smaller than another compartment. The compartments can be the same or different volumes. The unit dose articles may have a weight of from 10g to 40g, or from 15g to 35g.

Prior to be being formed into a unit dose article, the water-soluble film can have a thickness of from 20 to 150 micron, or from 35 to 125 micron, or from 50 to 110 micron. Suitable water soluble film materials typically comprise polymeric materials. The film material can be obtained by casting, blow-moulding, extrusion or blown extrusion of the polymeric material. The water-soluble film preferably comprises polyvinyl alcohol homopolymer, polyvinyl alcohol copolymer, or a blend of both. Suitable polyvinyl alcohol copolymers can be selected from sulphonated and carboxylated anionic polyvinylalcohol copolymers, especially carboxylated anionic polyvinylalcohol copolymers. A blend of polyvinylalcohol homopolymer and carboxylated anionic polyvinylalcohol copolymer, or a blend of two or more, preferably two polyvinyl alcohol homopolymers, is preferred. The film may be opaque, transparent or translucent. Suitable water soluble films include those supplied by Monosol under the trade names M8630, M8900, M8779, M8310. The film may comprise a printed area. The area of print may be achieved using techniques such as flexographic printing or inkjet printing. The film may comprise an aversive agent, such as a bittering agent selected from, but are not limited to, naringin, sucrose octaacetate, quinine hydrochloride, denatonium benzoate, or mixtures thereof. The aversive agent include can be added at a level of from 1.0 to 5000ppm, or 100 to 2500ppm, or 250 to 2000ppm.

## Surfactant system

The detergent composition can comprise the surfactant system at a level of from 2.5 % to 70 %, preferably from 7.0 % to 50 %, more preferably from 15 % to 35 % by weight of the composition.

Suitable surfactants as used herein means surfactants or mixtures of surfactants that provide cleaning, stain removing, or laundering benefit to soiled material. Suitable detersive surfactants can be: anionic surfactant, nonionic surfactant, amphoteric surfactant, zwitterionic surfactant, and combinations thereof.

As such, the surfactant system can comprise a combination of anionic and nonionic surfactant, more preferably a combination of anionic surfactant, nonionic surfactant, and amphoteric surfactant.

Preferably surfactants comprising saturated alkyl chains are used.

## Anionic surfactant

The surfactant system can comprise anionic surfactant at a level of from 1.4% to 52%, preferably from 4.4% to 20%, more preferably from 5.9% to 11.5% of the liquid laundry detergent composition.

The anionic surfactant can comprise alkyl sulfate anionic surfactant, preferably at a level of from 1.0% to 20%, preferably from 1.4% to 15.0%, more preferably from 2.0% to 8.0% of the liquid laundry detergent composition. The anionic surfactant can comprise alkyl sulfate anionic surfactant having an average degree of alkoxylation of 1.0 or less. The alkyl sulfate anionic surfactant can have a degree of alkoxylation of 0.7 or less, preferably 0.25 or less, more preferably is free of alkoxylation. If alkoxylation is present, ethoxylation is preferred.

Anionic sulfate salts suitable for use in the compositions of the invention include the primary and secondary alkyl sulfates, having a linear or branched alkyl or alkenyl moiety having from 9 to 22 carbon atoms or more preferably 12 to18 carbon atoms. Also useful are beta-branched alkyl sulfate surfactants or mixtures of commercially available materials, having a weight average (of the surfactant or the mixture) branching degree of at least 50%. Mid-chain branched alkyl sulfates or sulfonates are also suitable anionic surfactants for use in the compositions of the invention. Preferred are the C5-C22, preferably C10-C20 mid-chain branched alkyl primary sulfates. When mixtures are used, a suitable average total number of carbon atoms for the alkyl moieties is preferably within the range of from greater than 14.5 to 17.5. Preferred mono-methyl-branched primary alkyl sulfates are selected from the group consisting of the 3-methyl to 13-methyl

pentadecanol sulfates, the corresponding hexadecanol sulfates, and mixtures thereof. Dimethyl derivatives or other biodegradable alkyl sulfates having light branching can similarly be used.

Suitable alkyl sulfates also include C10-C18 alkyl sulfates, more preferably C12-C15 alkyl sulfates.

Preferred low ethoxylation alkyl sulfate surfactants do not comprise any further alkoxylation. Preferred low ethoxylation alkyl sulfate surfactants comprise branched alkyl sulfate surfactant. The branched alkyl sulfate surfactant can comprise at least 20%, preferably from 60% to 100%, more preferably from 80% to 90% by weight of the alkyl chains of the branched alkyl sulfate surfactant of 2-branched alkyl chains. Such branched alkyl sulfates with 2-branched alkyl chains can also be described as 2-alkyl alkanol sulfates, or 2-alkyl alkyl sulfates. The branched alkyl sulfates can be neutralized by sodium, potassium, magnesium, lithium, calcium, ammonium, or any suitable amines, such as, but not limited to monoethanolamine, triethanolamine and monoisopropanolamine, or by mixtures of any of the neutralizing metals or amines. Suitable branched alkyl sulfate surfactants can comprise alkyl chains comprising from 10 to 18 carbon atoms (C10 to C18) or from 12 to 15 carbon atoms (C12 to C15), with 13 to 15 carbon atoms (C13 to C15) being most preferred. The branched alkyl sulfate surfactant can be produced using processes which comprise a hydroformylation reaction in order to provide the desired levels of 2-branching. Particularly preferred branched alkyl sulfate surfactants comprise 2-branching, wherein the 2-branching comprises from 20% to 80%, preferably from 30% to 65%, more preferably from 40% to 50% by weight of the 2-branching of methyl branching, ethyl branching, and mixtures thereof.

Suitable low ethoxylated branched alkyl sulfate surfactants can be derived from alkyl alcohols such as Lial® 145, Isalchem® 145, both supplied by Sasol, optionally blending with other alkyl alcohols in order to achieve the desired branching distributions.

Processes to make such alkyl ether sulfate anionic surfactants may result in trace residual amounts of 1,4-dioxane by-product being present. The amount of 1,4-dioxane by-product within alkoxylated especially ethoxylated alkyl sulfates can be reduced. Based on recent advances in technology, a further reduction of 1,4-dioxane by-product can be achieved by subsequent stripping, distillation, evaporation, centrifugation, microwave irradiation, molecular sieving or catalytic or enzymatic degradation steps. An alternative is to use alkyl sulfate anionic surfactants which comprise only low levels of ethoxylation, or even being free of ethoxylation. As such, the alkyl sulfate surfactant can have a degree of ethoxylation of less than 1.0, or less than 0.5, or even be free of ethoxylation.

The surfactant system can comprise further anionic surfactant, such as sulfonate surfactant. The surfactant system can comprise sulfonate anionic surfactant at a level of from 6.0% to 30%, preferably from 8.0% to 25.0%, more preferably from 12% to 20% of the liquid laundry detergent composition. The sulfonate anionic surfactant can be selected from the group consisting of: alkylbenzene sulfonates, alkyl ester sulfonates, alkane sulfonates, alkyl sulfonated polycarboxylic acids, and mixtures thereof, preferably alkylbenzene sulfonates, alkyl ester sulfonates, alkane sulfonates, and mixtures thereof, more preferably alkylbenzene sulfonates. A combination of linear alkyl benzene sulfonate and alkyl sulfate surfactant is particularly preferred, and also improves stain removal.

Anionic sulfonate or sulfonic acid surfactants suitable for use herein include the acid and salt forms of alkylbenzene sulfonates, alkyl ester sulfonates, alkane sulfonates, alkyl sulfonated polycarboxylic acids, and mixtures thereof. Suitable anionic sulfonate or sulfonic acid surfactants include: C5-C20 alkylbenzene sulfonates, more preferably C10-C16 alkylbenzene sulfonates, more preferably C11-C13 alkylbenzene sulfonates, C5-C20 alkyl ester sulfonates, C6-C22 primary or secondary alkane sulfonates, C5-C20 sulfonated polycarboxylic acids, and any mixtures thereof, but preferably C11-C13 alkylbenzene sulfonates. The aforementioned surfactants can vary widely in their 2-phenyl isomer content.

The anionic surfactant can comprise sulfonate anionic surfactant, alkyl sulfate anionic surfactant, and mixtures thereof, preferably a mixture of sulfonate anionic surfactant and alkyl sulfate anionic surfactant. For improved stability and grease cleaning, the liquid detergent composition can comprise a combination of sulfonate surfactant and alkyl sulfate surfactant, preferably such that the ratio of linear alkyl benzene sulfonate surfactant to alkyl alkoxylated sulfate surfactant is in a weight ratio of from 15:1 to 0.5:1, preferably from 10:1 to 0.7:1, more preferably from 4:1 to 1:1.

Other suitable anionic surfactants include fatty acids and their salts, which are typically added as builders. However, by nature, every anionic surfactant known in the art of detergent compositions may be used, such as disclosed in "Surfactant Science Series", Vol. 7, edited by W. M. Linfield, Marcel Dekker.

Other suitable anionic surfactants for use herein include fatty methyl ester sulfonates and/or alkyl polyalkoxylated carboxylates, for example, alkyl ethoxylated carboxylates (AEC).

The anionic surfactants are typically present in the form of their salts with alkanolamines or alkali metals such as sodium and potassium.

<u>Nonionic surfactant</u>

The surfactant system can comprise nonionic surfactant. The nonionic surfactant is preferably selected from alkoxylated alkyl alcohol nonionic surfactant, alkyl polyglucoside, and mixtures thereof, more preferably wherein the nonionic surfactant comprises alkyl polyglucoside nonionic surfactant.

The surfactant system can comprise the alkyl polyglucoside ("APG") at a level of from 0.5% to 10%, preferably from 1.0% to 8.0%, more preferably from 2.0% to 6.0% by weight of the composition.

For improved crystalline grease removal, the alkyl polyglucoside surfactant can have a number average alkyl carbon chain length between 8 and 18, preferably between 10 and 16, most preferably between 12 and 14, with an average degree of polymerization of between 0.1 and 3.0 preferably between 1.0 and 2.0, most preferably between 1.2 and 1.6.

For improved initial sudsing, the alkyl polyglucoside surfactant can have a number average alkyl carbon chain length between 8 and 18, preferably between 8 and 14, most preferably between 8 and 10, with an average degree of polymerization of between 0.1 and 3.0 preferably between 1.0 and 2.0, most preferably between 1.2 and 1.6.

C8-C18 alkyl polyglucosides are commercially available from several suppliers (e.g., Simusol® surfactants from Seppic Corporation; and Glucopon® 600 CSUP, Glucopon® 650 EC, Glucopon® 600 CSUP/MB, and Glucopon® 650 EC/MB, from BASF Corporation).

Other suitable nonionic surfactants include, but are not limited to C12-C18 alkyl ethoxylates ("AE") including the so-called narrow peaked alkyl ethoxylates and C6-C12 alkyl phenol alkoxylates (especially ethoxylates and mixed ethoxy/propoxy), block alkylene oxide condensate of C6-C12 alkyl phenols, alkylene oxide condensates of C8-C22 alkanols and ethylene oxide/propylene oxide block polymers (Pluronic - BASF Corp.), as well as semi polar nonionics (e.g., amine oxides and phosphine oxides) can be used in the present compositions. An extensive disclosure of these types of surfactants is found in U.S. Pat. 3,929,678, Laughlin et al., issued December 30, 1975.

Alkylpolysaccharides such as disclosed in U.S. Pat. 4,565,647 Llenado are also useful nonionic surfactants in the compositions of the invention.

Also suitable are alkyl polyglucoside surfactants.

<u>Amphoteric and/or zwitterionic surfactant</u>

The surfactant system can comprise amphoteric and/or zwitterionic surfactant at a level of from 0.1% to 2.0%, preferably from 0.1% to 1.0%, more preferably from 0.1% to 0.5% by weight of the liquid laundry detergent composition.

Suitable amphoteric surfactants include amine oxide surfactants. Amine oxide surfactants are amine oxides having the following formula : $R_1R_2R_3NO$ wherein $R_1$ is an hydrocarbon chain comprising from 1 to 30 carbon atoms, preferably from 6 to 20, more preferably from 8 to 16 and wherein $R_2$ and $R_3$ are independently saturated or unsaturated, substituted or unsubstituted, linear or branched hydrocarbon chains comprising from 1 to 4 carbon atoms, preferably from 1 to 3 carbon atoms, and more preferably are methyl groups. $R_1$ may be a saturated or unsaturated, substituted or unsubstituted linear or branched hydrocarbon chain.

Suitable amine oxides for use herein are for instance preferably $C_{12}$-$C_{14}$ dimethyl amine oxide (lauryl dimethylamine oxide), commercially available from Albright & Wilson, $C_{12}$-$C_{14}$ amine oxides commercially available under the trade name Genaminox® LA from Clariant or AROMOX® DMC from AKZO Nobel.

Suitable amphoteric or zwitterionic detersive surfactants include those which are known for use in hair care or other personal care cleansing. Non-limiting examples of suitable zwitterionic or amphoteric surfactants are described in U.S. Pat. Nos. 5,104,646, 5,106,609. Suitable amphoteric detersive surfactants include those surfactants broadly described as derivatives of aliphatic secondary and tertiary amines in which the aliphatic radical can be straight or branched chain and wherein one of the aliphatic substituents contains from 8 to 18 carbon atoms and one contains an anionic group such as carboxy, sulfonate, sulfate, phosphate, or phosphonate. Suitable amphoteric detersive surfactants for use in the present invention include, but are not limited to: cocoamphoacetate, cocoamphodiacetate, lauroamphoacetate, lauroamphodiacetate, and mixtures thereof.

<u>Enzymes</u>

The detergent composition comprises an esterase enzyme. Esterases, also often referred to as hydrolases, are a group consisting of enzymes defined by their ability to catalyze the hydrolysis of carboxylic ester bonds. Lipases are lipolytic enzymes which constitute a class of esterases capable of releasing fatty acids, especially long chain fatty acids, from natural water-insoluble carboxylic esters. As such, they are commonly referred to as lipid esterases. Esterases, such as lipase have been found to be particularly effective at improving cleaning during low temperature laundering.

The esterase enzyme can be present in the detergent composition, such that in the wash liquor of at least one wash step, the lipase is present at a level of from 0.001 to 2.5ppm, preferably from 0.01 to 1.5ppm, more preferably from 0.025 to 0.75ppm.

The esterase can be selected from E.C. class 3.1. The esterase is preferably selected from the group consisting of:

a) lipase (E.C. 3.1.1.3);
b) carboxylic ester hydrolase (E.C. 3.1.1.1);

c) cutinase (E.C. 3.1.1.74);
d) sterol esterase (E.C. 3.1.1.13);
e) wax-ester hydrolase (E.C. 3.1.1.50);
f) and mixtures thereof.

The "E.C. class" refers to the Enzyme Commission class. The Enzyme Commission class is an international recognized enzyme classification scheme based on chemical reactions that the enzymes catalyse.

The esterase preferably comprises, more preferably consists of lipase. The lipase enzyme, also referred to as lipid esterase, preferably comprises a triacylglycerol lipase. Suitable lipases include those of bacterial, fungal or synthetic origin, and variants thereof. Chemically modified or protein engineered mutants are also suitable. Examples of suitable lipases include lipases from Humicola (synonym Thermomyces), e.g., from H. lanuginosa (T. lanuginosus).

The lipase may be a "first cycle lipase", e.g. such as those described in WO2006/090335 and WO2013/116261. In one aspect, the lipase is a first-wash lipase, preferably a variant of the wild- type lipase from Thermomyces lanuginosus comprising T231R and/or N233R mutations. The lipase may also be as those described in WO2017001673, WO2017005640, WO2022090361, WO2016102356, WO2016091870, WO201801959, US201850047, US20180037876, WO2018202846 and US20190233804.

The lipase can comprise a polypeptide with at least 60% sequence identity to SEQ ID NO: 1, preferably at least 70%, more preferably at least 80%, most preferably at least 90% but less than 100% sequence identity to the polypeptide having the amino acid sequence of SEQ ID NO: 1, and wherein the variant has lipase activity. The degree of identity between two amino acid sequences is determined using the Needleman-Wunsch algorithm (Needleman and Wunsch, 1970, J. Mol. Biol. 48: 443-453) as implemented in the Needle program of the EMBOSS package (EMBOSS: The European Molecular Biology Open Software Suite, Rice et al., 2000, Trends in Genetics 16: 276-277), preferably version 3.0.0 or later. The optional parameters used are gap open penalty of 10, gap extension penalty of 0.5, and the EBLOSUM62 (EMBOSS version of BLOSUM62) substitution matrix. The output of Needle labeled "longest identity" (obtained using the -nobrief option) is used as the percent identity and is calculated as follows: (Identical Residues x 100)/(Length of Alignment - Total Number of Gaps in Alignment).

A preferred lipase is a variant of SEQ ID NO:1 comprising: a substitution at position T231R and substitution at position N233R or N233C, more preferably the substitutions T231R and N233R.

The lipase can further comprise at least three further substitutions selected from E1C, D27R, N33Q, G38A, F51V, G91Q, D96E, K98L, K98I, D111A, G163K, H198S, E210Q, Y220F, D254S, I255A, and P256T.

The positions correspond to the positions of SEQ ID NO:1. The lipase variant preferably has at least 90% but less than 100% sequence identity to the polypeptide having the amino acid sequence of SEQ ID NO: 1. The variant has lipase activity.

One preferred lipase is a variant of SEQ ID NO: 1 comprising the following substitutions: T231R, N233R, D27R, G38A, D96E, D111A, G163K, D254S and P256T.

Another preferred lipase is a variant of SEQ ID NO: 1 comprising the following substitutions: T231R, N233R, N33Q, G91Q, E210Q, I255A.

Another preferred lipase is a variant of SEQ ID NO: 1 comprising the following substitutions: D27R, G38A, F51V, D96E, K98I, D111A, G163K, H198S, T231R, N233C, Y220F, D254S, P256T.

Preferred lipases include those sold under the tradenames Lipex®, Lipolex® and Lipoclean® and Lipoprime® by Novozymes, Bagsvaerd, Denmark.

Other suitable lipases include: Liprl 139, as described in WO2013/171241; TfuLip2, as described in WO2011/084412 and WO2013/033318; Pseudomonas stutzeri lipase, as described in WO2018228880; Microbulbifer thermotolerans lipase, as described in WO2018228881; Sulfobacillus acidocaldarius lipase, as described in EP3299457; LIP062 lipase as described in WO2018209026; PinLip lipase as described in WO2017036901, Absidia sp. lipase as described in WO2017005798, WO2017005816, WO2021001400, US20190390182; Pichia Pastoris lipase as described in WO2019206994; Proteus vulgaris lipase as described in WO2020046613; Vulcanisaeta moutnovskia lipase as described in WO2020104159; Pseudomonas mendocina lipase as described in WO2023278297, WO2023274925, WO2023247922, WO2023274923 and WO2022/197810; and Geotrichum candidum lipase as described in WO/2022/162043.

Suitable carboxylic ester hydrolases can be selected from wild-types or variants of carboxylic ester hydrolases endogenous to B. gladioli, P. fluorescens, P. putida, B. acidocaldarius, B. subtilis, B. stearothermophilus, Streptomyces chrysomallus, S. diastatochromogenes and Saccaromyces cerevisiae. Other suitable carboxylic ester hydrolases may be selected from Thermogutta terrifontis and Archaeoglobus fulgidus (WO2020104157A).

Suitable cutinases can be selected from wild-types or variants of cutinases endogenous to strains of Aspergillus, in particular Aspergillus oryzae, a strain of Alternaria, in particular Alternaria brassiciola, a strain of Fusarium, in particular Fusarium solani, Fusarium solani pisi, Fusarium oxysporum, Fusarium oxysporum cepa, Fusarium roseum culmorum, or Fusarium roseum sambucium, a strain of Helminthosporum, in particular Helminthosporum sativum, a strain of Humicola,

in particular Humicola insolens, a strain of Pseudomonas, in particular Pseudomonas mendocina, or Pseudomonas putida, a strain of Rhizoctonia, in particular Rhizoctonia solani, a strain of Streptomyces, in particular Streptomyces scabies, a strain of Coprinopsis, in particular Coprinopsis cinerea, a strain of Thermobifida, in particular Thermobifida fusca, a strain of Magnaporthe, in particular Magnaporthe grisea, or a strain of Ulocladium, in particular Ulocladium consortiale.

The cutinase can be selected from variants of the Pseudomonas mendocina cutinase described in WO 2003/076580 (Genencor), such as the variant with three substitutions at I178M, F180V, and S205G.

The cutinase can be a wild-type or variant of the six cutinases endogenous to Coprinopsis cinerea described in H. Kontkanen et al, App. Environ. Microbiology, 2009, p2148-2157.

The cutinase can be a wild-type or variant of the two cutinases endogenous to Trichoderma reesei described in WO2009007510 (VTT). In another preferred embodiment the cutinase is derived from a strain of Humicola insolens, in particular the strain Humicola insolens DSM 1800. Humicola insolens cutinase is described in WO 96/13580. The cutinase may be a variant, such as one of the variants disclosed in WO00/34450A and WO01/92502A. Preferred cutinase variants include variants listed in Example 2 of WO01/92502A.

Suitable sterol esterases may be derived from a strain of Ophiostoma, for example Ophiostoma piceae, a strain of Pseudomonas, for example Pseudomonas aeruginosa, or a strain of Melanocarpus, for example Melanocarpus albomyces. Other suitable sterol esterases are the Melanocarpus albomyces sterol esterase described in H. Kontkanen et al, Enzyme Microb Technol., 39, (2006), 265-273 and Corynebacterium sterol esterase (WO2020104158A).

Suitable wax-ester hydrolases may be derived from Simmondsia chinensis.

The composition can comprise further enzymes. Suitable further enzymes can provide cleaning performance and/or fabric care benefits. Examples of suitable enzymes include, but are not limited to, hemicellulases, peroxidases, proteases, cellulases, xylanases, phospholipases, cutinases, pectinases, keratanases, reductases, oxidases, phenoloxidases, lipoxygenases, ligninases, pullulanases, tannases, pentosanases, malanases, β-glucanases, arabinosidases, hyaluronidase, chondroitinase, laccase, and known amylases, or combinations thereof. A preferred enzyme combination comprises a cocktail of conventional detersive enzymes such as protease, lipase, cutinase and/or cellulase in conjunction with amylase. Detersive enzymes are described in greater detail in U.S. Patent No. 6,579,839.

Such further enzymes can be present in the detergent composition, such that the further enzyme or enzymes are present in the wash liquor of at least one wash step at a level of from 0.001 to 2.5ppm, preferably from 0.01 to 1.5ppm, more preferably from 0.025 to 0.75ppm.

Optional Ingredients

The detergent composition may additionally comprise one or more of the following optional ingredients: external structurant or thickener, enzyme stabilizers, cleaning polymers, bleaching systems, optical brighteners, hueing dyes, particulate material, perfume and other odour control agents, hydrotropes, suds suppressors, fabric care benefit agents, pH adjusting agents, dye transfer inhibiting agents, dye fixative polymers, preservatives, non-fabric substantive dyes and mixtures thereof. In more preferred embodiments, the laundry detergent composition does not comprise a bleach.

External structurant or thickener: Preferred external structurants and thickeners are those that do not rely on charge - charge interactions for providing a structuring benefit. As such, particularly preferred external structurants are uncharged external structurants, such as those selected from the group consisting of: non-polymeric crystalline, hydroxyl functional structurants, such as hydrogenated castor oil; microfibrillated cellulose; uncharged hydroxyethyl cellulose; uncharged hydrophobically modified hydroxyethyl cellulose; hydrophobically modified ethoxylated urethanes; hydrophobically modified non-ionic polyols; and mixtures thereof.

Suitable polymeric structurants include naturally derived and/or synthetic polymeric structurants.

Examples of naturally derived polymeric structurants of use in the present invention include: microfibrillated cellulose, hydroxyethyl cellulose, hydrophobically modified hydroxyethyl cellulose, carboxymethyl cellulose, polysaccharide derivatives and mixtures thereof. Non-limiting examples of microfibrillated cellulose are described in WO2009/101545A. Suitable polysaccharide derivatives include: pectine, alginate, arabinogalactan (gum Arabic), carrageenan, gellan gum, xanthan gum, guar gum and mixtures thereof.

Examples of synthetic polymeric structurants or thickeners of use in the present invention include: polycarboxylates, hydrophobically modified ethoxylated urethanes (HEUr), hydrophobically modified non-ionic polyols and mixtures thereof.

Preferably, the aqueous liquid detergent composition has a viscosity of 50 to 5,000, preferably 75 to 1,000, more preferably 100 to 500 mPa.s, when measured at a shear rate of 100 s-1, at a temperature of 20°C. For improved phase stability, and also improved stability of suspended ingredients, the aqueous liquid detergent composition has a viscosity of 50 to 250,000, preferably 5,000 to 125,000, more preferably 10,000 to 35,000 mPa.s, when measured at a shear rate of 0.05 s-1, at a temperature of 20°C.

Cleaning polymers: The detergent composition preferably comprises a cleaning polymer. Such cleaning

polymers are believed to at least partially lift the stain from the textile fibres and enable the enzyme system to more effectively break up the complexes comprising mannan and other polysaccharide. Suitable cleaning polymers provide for broad-range soil cleaning of surfaces and fabrics and/or suspension of the soils. Non-limiting examples of suitable cleaning polymers include: amphiphilic alkoxylated grease cleaning polymers; clay soil cleaning polymers; soil release polymers; and soil suspending polymers. A preferred cleaning polymer is obtainable by free-radical copolymerization of at least one compound of formula (I),

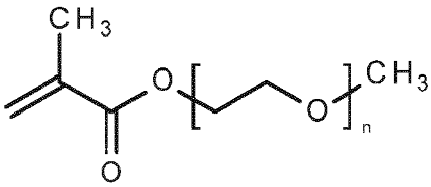
(I)

in which n is equal to or greater than 3 for a number,
with at least one compound of formula (II),

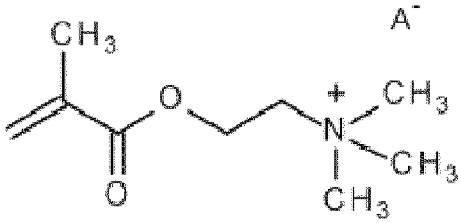
(II)

in which $A^-$ represents an anion, in particular selected from halides such as fluoride, chloride, bromide, iodide, sulfate, hydrogen sulfate, alkyl sulfate such as methyl sulfate, and mixtures thereof. Such polymers are further described in EP3196283A1.

For similar reasons, polyester based soil release polymers, such as SRA300, supplied by Clariant are also particularly preferred.

Other useful cleaning polymers are described in US20090124528A. The detergent composition may comprise amphiphilic alkoxylated grease cleaning polymers, which may have balanced hydrophilic and hydrophobic properties such that they remove grease particles from fabrics and surfaces. The amphiphilic alkoxylated grease cleaning polymers may comprise a core structure and a plurality of alkoxylate groups attached to that core structure. These may comprise alkoxylated polyalkyleneimines, for example. Such compounds may comprise, but are not limited to, ethoxylated polyethyleneimine, ethoxylated hexamethylene diamine, and sulfated versions thereof. Polypropoxylated derivatives may also be included. A wide variety of amines and polyalklyeneimines can be alkoxylated to various degrees. A useful example is 600g/mol polyethyleneimine core ethoxylated to 20 EO groups per NH and is available from BASF. The alkoxylated polyalkyleneimines may have an inner polyethylene oxide block and an outer polypropylene oxide block. The detergent compositions may comprise from 0.1% to 10%, preferably, from 0.1% to 8.0%, more preferably from 0.1% to 2.0%, by weight of the detergent composition, of the cleaning polymer.

Dye transfer inhibiting polymers: The detergent composition can comprise one or more dye transfer inhibiting polymer. However, preferred compositions do not comprise such dye transfer inhibiting polymers. It has been found that during laundering, many fabric-dyes partition between the fabric and wash-liquor. As such, the sequestering of dyes in the wash liquor using DTI polymers has been found to increase dye removal from fabrics, and hence increase dye-fading.

When used, suitable dye transfer inhibiting can be selected from the group consisting of polyvinylpyrrolidone (PVP), polyvinylimidazole (PVI), copolymers of vinylpyrrolidone and vinylimidazole (PVP/PVI), polyvinyl pyridine-N-oxide, poly-N-carboxymethyl-4-vinylpyridiumchloride, poly(2-hydroxypropyldimethylammonium chloride), and mixtures thereof, preferably polyvinylpyrrolidone (PVP), polyvinylimidazole (PVI), copolymers of vinylpyrrolidone and vinylimidazole (PVP/PVI), and mixtures thereof. If present, the dye transfer inhibitor can be present at a level of from 0.05% to 5%, or from 0.1% to 3%, and or from 0.2% to 2.5%, by weight of the detergent composition.

Polyvinylpyrrolidone ("PVP") has an amphiphilic character with a highly polar amide group conferring hydrophilic and polar attracting properties, and also has apolar methylene and methane groups, in the backbone and/or the ring, conferring hydrophobic properties. The rings may also provide planar alignment with the aromatic rings, in the dye molecules. PVP is readily soluble in aqueous and organic solvent systems. PVP is commercially available in either powder or aqueous solutions in several viscosity grades. The compositions of the present invention preferably utilize a copolymer

of N- vinylpyrrolidone and N-vinylimidazole (also abbreviated herein as "PVPVI"). It has been found that copolymers of N-vinylpyrrolidone and N-vinylimidazole can provide excellent dye transfer inhibiting performance. The copolymers of N-vinylpyrrolidone and N-vinylimidazole can have a molar ratio of N-vinylimidazole to N-vinylpyrrolidone from 1:1 to 0.2:1, more preferably from 0.8: 1 to 0.3: 1, most preferably from 0.6:1 to 0.4:1. The copolymer of N-vinylpyrrolidone and N-vinylimidazole can be either linear or branched. Particularly suitable polyvinylpyrrolidones (PVP), polyvinylimidazoles (PVI), and copolymers of vinylpyrrolidone and vinylimidazole (PVP/PVI), can have a weight average molecular weight of from 5,000 Da to 1,000, 000 Da, preferably from 5,000 Da to 50,000 Da, more preferably from 10,000 Da to 20,000 Da. The number average molecular weight range is determined by light scattering as described in Barth J. H. G. and Mays J. W. Chemical Analysis Vol 1 13. "Modern Methods of Polymer Characterization." Copolymers of poly (N-vinyl-2-pyrollidone) and poly (N-vinyl-imidazole) are commercially available from a number of sources including BASF. A preferred DTI is commercially available under the tradename Sokalan® HP 56 K from BASF (BASF SE, Germany).

Organic builder and/or chelant: The laundry detergent composition can comprise from 0.6% to 10%, preferably from 2 to 7% by weight of one or more organic builder and/or chelants. Suitable organic builders and/or chelants are selected from the group consisting of: MEA citrate, citric acid, aminoalkylenepoly(alkylene phosphonates), alkali metal ethane 1-hydroxy disphosphonates, and nitrilotrimethylene, phosphonates, diethylene triamine penta (methylene phosphonic acid) (DTPMP), ethylene diamine tetra(methylene phosphonic acid) (EDTMP), hexamethylene diamine tetra(methylene phosphonic acid), hydroxy- ethylene 1,1 diphosphonic acid (HEDP), hydroxyethane dimethylene phosphonic acid, ethylene di-amine di-succinic acid (EDDS), ethylene diamine tetraacetic acid (EDTA), hydroxyethylethylenediamine triacetate (HEDTA), nitrilotriacetate (NTA), methylglycinediacetate (MGDA), iminodisuccinate (IDS), hydroxyethyliminodisuccinate (HIDS), hydroxyethyliminodiacetate (HEIDA), glycine diacetate (GLDA), diethylene triamine pentaacetic acid (DTPA), catechol sulfonates such as Tiron™ and mixtures thereof.

Enzyme stabiliser: Enzymes can be stabilized using any known stabilizer system such as calcium and/or magnesium compounds, boron compounds and substituted boric acids, aromatic borate esters, peptides and peptide derivatives, polyols, low molecular weight carboxylates, relatively hydrophobic organic compounds [e.g. certain esters, diakyl glycol ethers, alcohols or alcohol alkoxylates], alkyl ether carboxylate in addition to a calcium ion source, benzamidine hypochlorite, lower aliphatic alcohols and carboxylic acids, N,N-bis(carboxymethyl) serine salts; (meth) acrylic acid-(meth)acrylic acid ester copolymer and PEG; lignin compound, polyamide oligomer, glycolic acid or its salts; poly hexa methylene bi guanide or N,N-bis-3-amino-propyl-dodecyl amine or salt; and mixtures thereof.

Hueing dyes: The detergent composition may comprise fabric hueing agent (sometimes referred to as shading, bluing, or whitening agents). Typically, the hueing agent provides a blue or violet shade to fabric. Hueing agents can be used either alone or in combination to create a specific shade of hueing and/or to shade different fabric types. This may be provided for example by mixing a red and green-blue dye to yield a blue or violet shade. Hueing agents may be selected from any known chemical class of dye, including but not limited to acridine, anthraquinone (including polycyclic quinones), azine, azo (e.g., monoazo, disazo, trisazo, tetrakisazo, polyazo), including premetallized azo, benzodifurane and benzodifuranone, carotenoid, coumarin, cyanine, diazahemicyanine, diphenylmethane, formazan, hemicyanine, indigoids, methane, naphthalimides, naphthoquinone, nitro and nitroso, oxazine, phthalocyanine, pyrazoles, stilbene, styryl, triarylmethane, triphenylmethane, xanthenes and combinations thereof.

Optical brighteners: The detergent composition may comprise, based on the total detergent composition weight, from 0.005% to 2.0%, preferably 0.01% to 0.1% of a fluorescent agent (optical brightener). Fluorescent agents are well known and many fluorescent agents are available commercially. Usually, these fluorescent agents are supplied and used in the form of their alkali metal salts, for example, the sodium salts. Preferred classes of fluorescent agent are: Di-styryl biphenyl compounds, e.g. Tinopal® CBS-X, Di-amine stilbene di-sulfonic acid compounds, e.g. Tinopal® DMS pure Xtra and Blankophor® HRH, and Pyrazoline compounds, e.g. Blankophor® SN. Preferred fluorescers are: sodium 2-(4-styryl-3-sulfophenyl)-2H-napthol[1 ,2-d]trazole, disodium 4,4'-bis{[(4-anilino-6-(N methyl-N-2 hydroxyethyl) amino 1 ,3,5-triazin-2-yl)]amino}stilbene-2-2' disulfonate, disodium 4,4'-bis{[(4-anilino-6-morpholino-1 ,3,5-triazin-2-yl)]annino} stilbene-2-2' disulfonate, and disodium 4,4'-bis(2-sulfoslyryl)biphenyl.

Hydrotrope: The detergent composition may comprise, based on the total detergent composition weight, from 0 to 30%, preferably from 0.5 to 5%, more preferably from 1.0 to 3.0%, which can prevent liquid crystal formation. The addition of the hydrotrope thus aids the clarity/transparency of the composition. Suitable hydrotropes comprise but are not limited to urea, salts of benzene sulfonate, toluene sulfonate, xylene sulfonate or cumene sulfonate. Preferably, the hydrotrope is selected from the group consisting of propylene glycol, xylene sulfonate, ethanol, and urea to provide optimum performance.

Particles: The composition can also comprise particles, especially when the composition further comprises a structurant or thickener. The composition may comprise, based on the total composition weight, from 0.02% to 10%, preferably from 0.1% to 4.0%, more preferably from 0.25% to 2.5% of particles. Said particles include beads, pearlescent agents, capsules, and mixtures thereof.

Suitable capsules are typically formed by at least partially, preferably fully, surrounding a benefit agent with a wall material. Preferably, the capsule is a perfume capsule, wherein said benefit agent comprises one or more perfume raw

materials. The capsule wall material may comprise: melamine, polyacrylamide, silicones, silica, polystyrene, polyurea, polyurethanes, polyacrylate based materials, polyacrylate esters based materials, gelatin, styrene malic anhydride, polyamides, aromatic alcohols, polyvinyl alcohol, resorcinol-based materials, poly-isocyanate-based materials, acetals (such as 1,3,5-triol-benzene-gluteraldehyde and 1,3,5-triol-benzene melamine), starch, cellulose acetate phthalate and mixtures thereof. Preferably, the capsule wall comprises melamine and/or a polyacrylate based material. The perfume capsule may be coated with a deposition aid, a cationic polymer, a non-ionic polymer, an anionic polymer, or mixtures thereof. Preferably, the perfume capsules have a volume weighted mean particle size from 0.1 microns to 100 microns, preferably from 0.5 microns to 60 microns. Especially where the composition comprises capsules having a shell formed at least partially from formaldehyde, the composition can additionally comprise one or more formaldehyde scavengers.

The detergent composition can comprise organic solvent, preferably wherein the organic solvent is selected from the group consisting of: C1-C5 alkanols, C2-C6 diols, C3-C8 alkylene glycols, C3-C8 alkylene glycol mono lower alkyl ethers, glycol dialkyl ether, polyethylene glycols, C3-C9 triols, and mixtures thereof; more preferably wherein the organic solvent comprises C1-C5 alkanols, C2-C6 diols, C3-C9 triols, and mixtures thereof; more preferably wherein the organic solvent comprises ethanol, 1,2-propanediol, glycerol, and mixtures thereof. The detergent composition can comprise organic solvent at a level of from 0.5% to 50%, preferably from 1.0% to 35%, more preferably from 2.0% to 15% by weight of the detergent composition.

Process of making the laundry detergent composition:

The laundry detergent compositions can be made using any suitable process known to the skilled person. Typically, the ingredients are blended together in any suitable order. Preferably, the detersive surfactants are added as part of a concentrated premix, to which are added the other optional ingredients. Preferably, the solvent is added either last, or if an external structurant is added, immediately before the external structurant, with the external structurant being added as the last ingredient.

METHODS

A) pH measurement:

The pH is measured, at 25°C, using a Santarius PT-10P pH meter with gel-filled probe (such as the Toledo probe, part number 52 000 100), calibrated according to the instruction manual. The pH is measured in a 10% dilution in demineralised water (i.e. 1 part laundry detergent composition and 9 parts demineralised water).

B) Method of measuring viscosity:

The viscosity is measured using an AR 2000 rheometer from TA instruments using a cone and plate geometry with a 40 mm diameter and an angle of 1°. The viscosity at the different shear rates is measured via a logarithmic shear rate sweep from 0.1 $s^{-1}$ to 1200 $s^{-1}$ in 3 minutes time at 20°C. Low shear viscosity is measured at a continuous shear rate of 0.05 $s^{-1}$.

EXAMPLES

The following test formulae, as detailed in table 1, were prepared.

The following procedure was used to evaluate the multi-cycle whiteness benefit from methods using these test formulae, in which fabrics that had been previously laundered using a fabric softener.

The method involves the use of a tergotometer for multiple wash cycles to simulate the deposition of soil on fabrics that would occur during repeated washes in a washing machine.

The test formulae were used to wash white knitted cotton, white terry towel, and polyester test fabrics together with artificially added soil. The test fabrics (supplied by Warwick-Equest Ltd., Stanley, UK) were cut into 5cm x 5cm squares. 8 replicates of each test fabric were used for each test leg.

A test wash solution was prepared, comprising the test formula at a level of 3.85g/l in water of 313.4 ppm $CaCO_3$ equivalent hardness (18 gp).

The test fabrics, 15 soil sheets (5cm x 5cm SBL 2004 soil sheets, sold by WFK test materials, Brüggen-Bracht, Germany), 1.0 l of the wash solution, and sufficient knitted cotton ballast was added to provide a 21:1 water: cloth weight ratio, was added to the Tergometer pots.

The fabrics were subsequently washed at a temperature of 20 °C under agitation at 300 rpm for 35 minutes. After the wash, the wash water was removed by spinning at 1000 rpm for 2 minutes, and replaced with 1.01 clean rinse water at 15°C and a hardness of 313 ppm (18 US gpg). The fabrics and ballast were then agitated at 208 rpm for 5 minutes. After the

first rinse, the rinse water was removed by spinning at 1000 rpm 2 minutes and replaced with clean rinse water at 15°C and a hardness of 313 ppm (18 US gpg), to which a commercial liquid fabric softener, comprising 5.6% by weight of alkyl quaternary ammonium ester materials and polydimethylsiloxane, was dosed at a level of 2ml per litre. The fabrics and ballast were then agitated at 208rpm for 5 minutes before a final spin of 1000 rpm for 2 minutes.

This process was repeated using the same fabrics/ballast and adding fresh soil for a further wash 3 cycles. The test fabrics were then dried at ambient room temperature for at least 12 hours.

The CIE whiteness values of the test fabrics were measured after 4 cycles using a Konica Minolta spectrophotometer, the data were reported as average δ CIE whiteness loss vs a clean unwashed fabric.

The test procedure was then repeated changing 20°C wash temperature to 40°C wash temperature.

The results are also given in Table 1.

Table 1: Inventive and comparative liquid laundry compositions and whiteness results after laundering at 40°C and at 20°C

| wt% (100% active basis) | Ex 1 | Ex A | Ex B |
|---|---|---|---|
| Linear alkylbenzene sulphonic acid | 16 | 16 | 20 |
| C12-C14 E08 nonionic | 8.0 | 12 | 8.0 |
| Ethoxylated polyethyleneimine | 2.0 | 2.0 | 2.0 |
| Esterase enzyme[1] | 0.008 | - | - |
| 1, 2 Propanediol | 12 | 12 | 12 |
| Monoethanolamine | 6.4 | 6.4 | 6.4 |
| TPK Fatty Acid | 2.0 | 2.0 | 2.0 |
| Sodium Cumene Sulfonate | 2.0 | 2.0 | 2.0 |
| Water | balance | balance | balance |
| | | | |
| pH (10% solution in demi water) | 8.0 | 8.0 | 8.0 |
| | | | |
| Average δ CIE whiteness loss of fabrics laundered:<br>Knitted cotton:<br>at 40°C<br>at 20°C | <br><br>-13.8<br>-12.4 | <br><br>-15.8<br>-15.6 | <br><br>-20.4<br>-20.4 |
| [1] lipase, sold under the trade name Lipex® 100L by Novozymes | | | |

As mentioned earlier, methods of laundering fabrics, and especially cotton-comprising fabrics, which comprise a fabric softening step, can result the fabric becoming more dingy and less white. As shown in the test above, laundering such fabric softener treated fabrics using a detergent composition comprising an esterase enzyme such as lipase (example 1 of the invention) results in less whiteness loss, in comparison to methods where the composition does not comprise such enzymes but comprises higher levels of nonionic surfactant (comparative example A), or comparative compositions which comprise higher levels of anionic surfactant (comparative example B).

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

**1.** A method of laundering fabrics, the method comprising the steps of:

a) providing fabric that has been treated with fabric conditioning active, wherein the liquid fabric conditioning composition comprises alkyl quaternary ammonium ester materials;
b) washing the fabric in at least one wash step, wherein in the wash step, the fabric is washed in a wash liquor

comprising water and a detergent composition;
wherein:

the wash liquor is at a temperature of 30 °C or less; and
the detergent composition comprises a surfactant system, wherein the surfactant system comprises anionic surfactant, wherein the detergent composition further comprises an esterase enzyme.

**2.** The method according to claim 1, wherein the wash liquor is at a temperature of from 10 °C to 30 °C, more preferably from 15 °C to 25 °C.

**3.** The method according to any preceding claim, wherein in the at least one wash step, the wash liquor has a surfactant concentration of greater than 300 ppm, preferably from 400 ppm to 2,500 ppm, more preferably from 600 ppm to 1000 ppm.

**4.** The method according to any preceding claim, wherein the fabric is selected from the group consisting of: cotton, polyester, and mixtures thereof, preferably wherein the fabric comprises cotton.

**5.** The method according to any preceding claim, wherein in the at least one wash step, the fabric and wash liquor are present in a weight ratio of from 0.02 to 0.6, preferably from 0.03 to 0.5, more preferably from 0.1 to 0.4.

**6.** The method according to any preceding claim, wherein the detergent composition comprises the surfactant system at a level of from 2.5 % to 70 %, preferably from 7.0 % to 60 %, more preferably from 15 % to 35 % by weight of the composition.

**7.** The method according to any preceding claim, wherein in the detergent composition, the surfactant system comprises sulfonate anionic surfactant, preferably wherein the surfactant system comprises sulfonate anionic surfactant and alkyl sulfate anionic surfactant, preferably wherein the sulfonate anionic surfactant and alkyl sulfate anionic surfactant are present in a weight ratio of from 15:1 to 0.5:1, preferably from 10:1 to 0.7:1, more preferably from 4:1 to 1:1.

**8.** The method according to any preceding claim, wherein the esterase enzyme is present in the wash liquor of at least one wash step at a level of from 0.001 to 2.5ppm, preferably from 0.01 to 1.5ppm, more preferably from 0.025 to 0.75ppm.

**9.** The method according to any preceding claim, wherein the esterase is selected from E.C. class 3.1, preferably wherein the esterase selected from the group consisting of:

a) lipase (E.C. 3.1.1.3);
b) carboxylic ester hydrolase (E.C. 3.1.1.1);
c) cutinase (E.C. 3.1.1.74);
d) sterol esterase (E.C. 3.1.1.13);
e) wax-ester hydrolase (E.C. 3.1.1.50);
f) and mixtures thereof.

**10.** The method according to any preceding claim, wherein the esterase comprises lipase, more preferably consists of lipase.

**11.** The method according to claim 10, wherein the lipase comprises a polypeptide with at least 60% sequence identity to the polypeptide having the amino acid sequence of SEQ ID NO: 1, preferably at least 70%, more preferably at least 80%, more preferably at least 90% but less than 100% sequence identity to the polypeptide having the amino acid sequence of SEQ ID NO: 1, and wherein the variant has lipase activity.

**12.** The method according to claim 10 or 11, wherein the lipase is a variant of SEQ ID NO: 1 comprising: a substitution at position T231R and a substitution at position N233R or N233C, more preferably substitutions at positions T231R and N233R, wherein the positions correspond to the positions of SEQ ID NO:1 and preferably wherein the lipase variant has at least 90% but less than 100% sequence identity to the polypeptide having the amino acid sequence of SEQ ID NO: 1 and wherein the variant has lipase activity.

**13.** The method according to claim 12, wherein the lipase further comprise at least three further substitutions selected

from E1C, D27R, N33Q, G38A, F51V, G91Q, D96E, K98L, K98I, D111A, G163K, H198S, E210Q, Y220F, D254S, I255A, and P256T.

**14.** The method of laundering fabrics according to any preceding claims, wherein in the detergent composition, the alkyl sulfate anionic surfactant has an average degree of alkoxylation of 0.7 or less, preferably 0.25 or less, more preferably is free of alkoxylation.

**15.** The method of laundering fabrics according to any preceding claim, wherein the liquid fabric conditioning composition comprises alkyl quaternary ammonium ester materials, wherein the alkyl quaternary ammonium ester materials are selected from the group consisting of: monoester quats, diester quats, triester quats and mixtures thereof.

Europäisches Patentamt
European Patent Office
Office européen des brevets

# EUROPEAN SEARCH REPORT

Application Number
EP 24 20 6149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 312 266 A1 (PROCTER & GAMBLE [US]) 25 April 2018 (2018-04-25) * paragraphs [0005] - [0010], [0017], [0024] - [0026], [0061] - [0063] * * examples * * claims * | 1-15 | INV. C11D1/37 C11D3/00 C11D3/386 C11D1/62 ADD. C11D1/14 C11D1/22 |
| X | EP 2 476 743 A1 (UNILEVER PLC [GB]; UNILEVER NV [NL]) 18 July 2012 (2012-07-18) * paragraphs [0007] - [0009], [0013], [0014], [0019] - [0024], [0057] - [0061] * * examples * * claims * | 1-15 | |
| A | EP 2 987 849 A1 (PROCTER & GAMBLE [US]) 24 February 2016 (2016-02-24) * paragraphs [0004], [0005], [0014], [0019] - [0022], [0036], [0037], [0052] * * example 1; tables 1, 2 * * claims * | 1-15 | TECHNICAL FIELDS SEARCHED (IPC) C11D |
| A | US 2014/230156 A1 (LANT NEIL JOSEPH [GB] ET AL) 21 August 2014 (2014-08-21) * paragraphs [0005] - [0012], [0120] * * examples 1, 8-10 * | 1-15 | |

The present search report has been drawn up for all claims

| Place of search | Date of completion of the search | Examiner |
|---|---|---|
| The Hague | 4 April 2025 | Bertran Nadal, Josep |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 20 6149

This annex lists the patent family members relating to the patent documents cited in the above-mentioned European search report. The members are as contained in the European Patent Office EDP file on
The European Patent Office is in no way liable for these particulars which are merely given for the purpose of information.

04-04-2025

| Patent document cited in search report | Publication date | Patent family member(s) | Publication date |
|---|---|---|---|
| EP 3312266 A1 | 25-04-2018 | CA 3036891 A1 | 26-04-2018 |
| | | EP 3312266 A1 | 25-04-2018 |
| | | ES 2761930 T3 | 21-05-2020 |
| | | HU E046460 T2 | 28-02-2020 |
| | | JP 6749486 B2 | 02-09-2020 |
| | | JP 2019533042 A | 14-11-2019 |
| | | PL 3312266 T3 | 30-04-2020 |
| | | RU 2712189 C1 | 24-01-2020 |
| | | US 2018112154 A1 | 26-04-2018 |
| | | WO 2018075834 A1 | 26-04-2018 |
| EP 2476743 A1 | 18-07-2012 | AR 085771 A1 | 23-10-2013 |
| | | AU 2012238950 A1 | 19-09-2013 |
| | | BR 112013025674 B1 | 02-02-2021 |
| | | CL 2013002817 A1 | 22-08-2014 |
| | | CN 103459577 A | 18-12-2013 |
| | | EP 2476743 A1 | 18-07-2012 |
| | | EP 2694635 A1 | 12-02-2014 |
| | | ES 2421162 T3 | 29-08-2013 |
| | | MY 161793 A | 15-05-2017 |
| | | PH 12013501797 A1 | 17-07-2019 |
| | | PL 2694635 T3 | 31-05-2016 |
| | | WO 2012136427 A1 | 11-10-2012 |
| | | ZA 201306447 B | 29-10-2014 |
| EP 2987849 A1 | 24-02-2016 | NONE | |
| US 2014230156 A1 | 21-08-2014 | BR 112015018988 A2 | 18-07-2017 |
| | | CA 2899789 A1 | 28-08-2014 |
| | | CN 104955930 A | 30-09-2015 |
| | | EP 2767579 A1 | 20-08-2014 |
| | | US 2014230156 A1 | 21-08-2014 |
| | | WO 2014130512 A1 | 28-08-2014 |
| | | ZA 201505370 B | 29-03-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2987849 A
- US 2014230156 A
- EP 3312266 A
- EP 2476743 A
- US 4137180 A
- US 3929678 A, Laughlin
- US 4565647 A, Llenado
- US 5104646 A
- US 5106609 A
- WO 2006090335 A
- WO 2013116261 A
- WO 2017001673 A
- WO 2017005640 A
- WO 2022090361 A
- WO 2016102356 A
- WO 2016091870 A
- WO 201801959 A
- US 201850047 B
- US 20180037876 A
- WO 2018202846 A
- US 20190233804 A
- WO 2013171241 A
- WO 2011084412 A
- WO 2013033318 A
- WO 2018228880 A
- WO 2018228881 A
- EP 3299457 A
- WO 2018209026 A
- WO 2017036901 A
- WO 2017005798 A
- WO 2017005816 A
- WO 2021001400 A
- US 20190390182 A
- WO 2019206994 A
- WO 2020046613 A
- WO 2020104159 A
- WO 2023278297 A
- WO 2023274925 A
- WO 2023247922 A
- WO 2023274923 A
- WO 2022197810 A
- WO 2022162043 A
- WO 2020104157 A
- WO 2003076580 A
- WO 2009007510 A
- WO 9613580 A
- WO 0034450 A
- WO 0192502 A
- WO 2020104158 A
- US 6579839 B
- WO 2009101545 A
- EP 3196283 A1
- US 20090124528 A


### Non-patent literature cited in the description


- Surfactant Science Series. Marcel Dekker, vol. 7
- **NEEDLEMAN** ; **WUNSCH**. *J. Mol. Biol.*, 1970, vol. 48, 443-453
- **RICE et al.** EMBOSS: The European Molecular Biology Open Software Suite. *Trends in Genetics*, 2000, vol. 16, 276-277
- **H. KONTKANEN et al.** *App. Environ. Microbiology*, 2009, 2148-2157
- **H. KONTKANEN et al.** *Enzyme Microb Technol.*, 2006, vol. 39, 265-273
- **BARTH J. H. G.** ; **MAYS J. W.** Modern Methods of Polymer Characterization. *Chemical Analysis*, vol. 1, 13